# EUROPÄISCHE PATENTANMELDUNG

(11) **EP 3 620 751 A2**
(43) Veröffentlichungstag der Anmeldung: **11.03.2020**
(21) Anmeldenummer: 19193506.3
(22) Anmeldetag: 26.08.2019
(51) Int. Cl.: G01C 21/34, G01C 21/36, G06Q 10/02

(54) **VORRICHTUNG, VERFAHREN UND SYSTEM ZUR ROUTENPLANUNG EINES ELEKTROMOBILS**

(30) Priorität: 04.09.2018 DE 102018214986
(71) Anmelder: ZF Friedrichshafen AG, 88046 Friedrichshafen (DE)
(72) Erfinder: Jung, Andreas, 88281 Schlier (DE); Notheis, Philipp, 88682 Salem (DE)

(57) **Zusammenfassung**

Die vorliegende Erfindung betrifft eine Vorrichtung (10) zur Routenplanung eines Elektromobils (26), mit: einer Eingangsschnittstelle (12) zum Empfangen eines aktuellen Ladezustands eines Energiespeichers (24) des Elektromobils sowie einer geplanten Route (32) des Elektromobils; einer Datenbankschnittstelle (14) zum Empfangen von Ladestationsinformationen mit Positionen von Ladestationen; einer Energieplanungseinheit (16) zum Ermitteln eines voraussichtlichen Verlaufs des Ladezustands des Energiespeichers basierend auf dem aktuellen Ladezustand des Energiespeichers und der geplanten Route; einer Ladeplanungseinheit (18) zum Auswählen einer Ladestation basierend auf dem voraussichtlichen Verlauf des Ladezustands, den Ladestationsinformationen und der geplanten Route; und einer Anpassungseinheit (20) zum Ermitteln mindestens einer angepassten Route (34) über die Position der ausgewählten Ladestation (40) basierend auf der geplanten Route. Die Erfindung betrifft weiterhin ein Verfahren und ein System zur Routenplanung eines Elektromobils.

## Beschreibung

Die vorliegende Erfindung betrifft eine Vorrichtung, ein Verfahren, ein System sowie ein Navigationsgerät zur Routenplanung eines Elektromobils.

Die meisten Verkehrsteilnehmer verwenden heutzutage Routenplanungs- oder Navigationsgeräte, um zu einem Ziel zu gelangen. Derartige Geräte können in einem Fahrzeug mit einem Fahrzeuginformations- und Unterhaltungssystem kombiniert ausgeführt sein. Alternativ gibt es auch separat ausgeführte Geräte, die beispielsweise durch Anbringen an die Windschutzscheibe eines PKW eine einfache nachträgliche Installation erlauben. Zudem kann eine entsprechende Funktionalität auch von einem Mobiltelefon oder Tablet mit einer entsprechenden Software (App) erfüllt werden.

Zumeist verfügen aktuelle Navigationsgeräte über einen internen oder externen Positionssensor, beispielsweise einen GPS-Empfänger, der eine Ermittlung und Nachverfolgung der eigenen Position erlaubt. Die Eingabe einer Zielposition erfolgt normalerweise manuell durch den Fahrer, beispielsweise über eine Tastatur, ein Touchscreen oder eine Spracheingabe. Ausgehend von der eigenen Position als Startposition und der eingegebenen Zielposition wird dann basierend auf entsprechend aufbereitetem Kartenmaterial eine Route geplant. Während der Fahrt werden visuell und/oder akustisch Anweisungen an den Fahrer zum Folgen der ermittelten Route ausgegeben, um die Zielposition zu erreichen.

Aufgrund politischer Vorgaben und technologischer Weiterentwicklungen nimmt die Bedeutung der Elektromobilität immer weiter zu. Obwohl noch vor kurzer Zeit nur eine vernachlässigbare Anzahl an Fahrzeugen mit elektrischem Antrieb unterwegs war, gibt es zwischenzeitlich ein stetig wachsendes Angebot an Elektromobilen wie Elektroautos, Elektro-Lastkraftwagen oder auch Elektrozweiräder für unterschiedlichste Anwendungsbereiche. Diese Entwicklung erfordert das Bereitstellen einer entsprechenden Ladeinfrastruktur zum Laden von Elektromobilen.

Üblicherweise benötigen Elektromobile im Gegensatz zu Fahrzeugen mit Verbrennungsmotoren, die mit Benzin oder Diesel betankt werden, eine höhere Ladefrequenz (geringere Reichweite) und auch längere Ladezeiten. Beispielsweise werden Batterie-Ladezeiten für Elektroautos bei Verwendung von Standardsteckern oft mit einer bis vier Stunden bis zur Vollladung angegeben. Eine unzureichende Anzahl an Ladestationen kann zu Wartezeiten beim Laden führen und erhebliche Verzögerungen einer Reise bedingen. Zudem gibt es oft unterschiedliche Ankopplungssysteme (Stecker), sodass nicht zwangsweise eine Kompatibilität der Ladeschnittstelle des Elektromobils mit der Schnittstelle der Ladestation besteht. Die Verfügbarkeit von Ladestationen wird als zentraler Faktor für die weitere Verbreitung der Elektromobilität angesehen.

In diesem Zusammenhang betrifft die WO 2017/092817 A1 ein Ladesystem für Fahrzeuge. Ein System zum Austausch von Versorgungsmedien umfasst mindestens eine Austauschstation mit einer Austauschschnittstelle zum Austauschen eines Versorgungsmediums.

Eine neue Herausforderung besteht hierbei in der Wahl einer optimalen Reiseroute bei Verwendung eines Elektromobils. Auf der einen Seite muss eine ausreichende Anzahl an ausreichend langen Ladestopps eingeplant werden, auf der anderen Seite ist anderen Kriterien, wie beispielsweise einer möglichst kurzen Reisezeit, geringen Kosten sowie persönlichen Vorlieben des Fahrers Rechnung zu tragen. Bisherige Ansätze erfordem oft, dass der Fahrer eines Elektromobils selbst darauf achtet, zu einem möglichst günstigen Zeitpunkt eine Ladestation zu erreichen. Die Reichweite des Elektromobils soll möglichst ausgenutzt werden, um eine kurze Reisezeit sicherzustellen. Allerdings muss auch gewährleistet sein, dass rechtzeitig eine Ladestation erreicht wird.

Ausgehend hiervon stellt sich der vorliegenden Erfindung die Aufgabe, die Routenplanung eines Elektromobils weiter zu verbessern. Die Notwendigkeit einer manuellen Interaktion durch den Fahrer soll verringert werden. Insbesondere sollen die Reisezeit des Elektromobils verringert sowie der Komfort für den Fahrer erhöht werden.

Zur Lösung dieser Aufgabe betrifft ein Aspekt der vorliegenden Erfindung eine Vorrichtung zur Routenplanung eines Elektromobils, mit:
einer Eingangsschnittstelle zum Empfangen eines aktuellen Ladezustands eines Energiespeichers des Elektromobils sowie einer geplanten Route des Elektromobils;
einer Datenbankschnittstelle zum Empfangen von Ladestationsinformationen mit Positionen von Ladestationen;
einer Energieplanungseinheit zum Ermitteln eines voraussichtlichen Verlaufs des Ladezustands des Energiespeichers basierend auf dem aktuellen Ladezustand des Energiespeichers und der geplanten Route;
einer Ladeplanungseinheit zum Auswählen einer Ladestation basierend auf dem voraussichtlichen Verlauf des Ladezustands, den Ladestationsinformationen und der geplanten Route; und
einer Anpassungseinheit zum Ermitteln mindestens einer angepassten Route über die Position der ausgewählten Ladestation basierend auf der geplanten Route.

Weiterhin betrifft ein Aspekt der Erfindung ein Verfahren zur Routenplanung eines Elektromobils, mit den Schritten:
Empfangen eines aktuellen Ladezustands eines Energiespeichers des Elektromobils sowie einer geplanten Route des Elektromobils;
Empfangen von Ladestationsinformationen mit Positionen von Ladestationen;
Ermitteln eines voraussichtlichen Verlaufs des Ladezustands des Energiespeichers basierend auf dem aktuellen Ladezustand des Energiespeichers und der geplanten Route;
Auswählen einer Ladestation basierend auf dem voraussichtlichen Verlauf des Ladezustands, den Ladestationsinformationen und der geplanten Route; und
Ermitteln mindestens einer angepassten Route über die Position der ausgewählten Ladestation basierend auf der geplanten Route.

Zudem betrifft ein Aspekt der Erfindung ein Navigationsgerät mit einer Vorrichtung wie zuvor beschrieben und einer Routenplanungseinheit zum Ermitteln einer Route von einer Startposition zu einer Zielposition.

Ein weiterer Aspekt betrifft ein System zur Routenplanung eines Elektromobils mit:
einer Vorrichtung wie zuvor beschrieben;
einem Energiespeicher eines Elektromobils zum Speichern von Energie;
einer Datenbank zum Vorhalten von Ladestationsinformationen; und
einer Routenplanungseinheit zum Ermitteln einer Route von einer Startposition zu einer Zielposition.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können die Vorrichtung, das Verfahren, das Navigationsgerät, das System und das Computerprogrammprodukt entsprechend der für die Vorrichtung und das System in den abhängigen Ansprüchen beschriebenen Ausgestaltungen ausgeführt sein.

Die vorliegende Erfindung basiert darauf, dass bei der Routenplanung eines Elektromobils einerseits die Positionen von Ladestationen zum Aufladen des Energiespeichers und andererseits die voraussichtliche Entwicklung des Ladezustands des Energiespeichers des Elektromobils berücksichtigt werden. Zunächst werden der aktuelle Ladezustand, also der Füllstand des Energiespeichers des Elektromobils, sowie eine (vor-) geplante Route empfangen. Dann werden von einer Datenbank Ladestationsinformationen empfangen, die zumindest die Positionen von Ladestationen umfassen. Ausgehend von der geplanten Route sowie vom aktuellen Ladezustand des Energiespeichers wird ermittelt, wie sich dieser Ladezustand beim Befahren der geplanten Route voraussichtlich entwickeln wird. Es wird also eine Prognose erstellt, zu welchem Zeitpunkt noch welche Restmenge an Energie im Energiespeicher verbleibt. Hierbei wird insbesondere die zurückgelegte Entfernung berücksichtigt, wobei aber auch weitere Informationen zu der geplanten Route miteinbezogen werden können. Zuletzt wird ausgehend von dieser Prognose sowie von den Ladestationsinformationen eine Anpassung der geplanten Route vorgenommen, um eine ausgewählte Ladestation zu passieren, an der der Energiespeicher geladen werden kann. Es wird also automatisiert eine geeignete Ladestation vorgeschlagen und die zuvor ermittelte Route so geändert, dass diese ausgewählte Ladestation passiert wird. Im Ergebnis wird eine angepasste Route mit einem Vorschlag für eine Ladestation zum Aufladen des Energiespeichers bereitgestellt.

Im Gegensatz zu bisherigen Ansätzen ist es nicht erforderlich, dass der Fahrer des Elektromobils eine manuelle Planung des gegebenenfalls erforderlichen Ladevorgangs vornimmt. Bisherige Ansätze, wie beispielsweise eine App-basierte Datenbank mit verfügbaren Ladestationen und deren Positionen, erfordern, dass der Fahrer manuell eine Auswahl trifft. Im Gegensatz hierzu ist es erfindungsgemäß vorgesehen, die verfügbaren Informationen zum Ladezustand sowie zur Strecke zu nutzen, um automatisiert eine optimale Ladestation zu ermitteln und vorzuschlagen. Die geplante Route wird modifiziert, um die vorgeschlagene Ladestation zu passieren, ohne dass der Fahrer eingreifen muss. Die Reisezeit wird minimiert und ein zu häufiges Aufladen des Energiespeichers wird vermieden. Eine hinsichtlich der Reisezeit optimierte Route wird ermittelt.

In einer bevorzugten Ausgestaltung umfasst die Vorrichtung eine Benutzerschnittstelle zum Ausgeben der mindestens einen angepassten Route an einen Benutzer und zum Empfangen einer ausgewählten Route, die vom Benutzer ausgewählt wurde. Vorzugsweise werden mehrere mögliche angepasste Routen ermittelt, die gegebenenfalls unterschiedliche Ladestationen passieren. Um dem Benutzer (bspw. dem Fahrer des Elektromobils) eine Auswahl zu ermöglichen, kann dann über eine Benutzerschnittstelle eine Interaktion (Ausgabe der Möglichkeiten und Eingabe der Wahl des Benutzers) erfolgen. Im Gegensatz zu bisherigen Ansätzen werden Routenvorschläge mit vorgeplanten Zwischenstopps an Ladestationen ausgegeben. Durch die Auswahl kann der Benutzer zusätzlich eigene Präferenzen einbringen, (beispielsweise durch Auswahl einer Landstraßenstrecke, die zwar kürzer ist, jedoch geringfügig zeitintensiver als eine ebenfalls mögliche Autobahnstrecke).

In einer weiteren bevorzugten Ausgestaltung ist die Benutzerschnittstelle zum Ausgeben von Zusatzinformationen zu der mindestens einen angepassten Route ausgebildet; und umfassen die Zusatzinformationen bevorzugt einen Strompreis an der ausgewählten Ladestation. Es ist möglich, dass über die Benutzerschnittstelle weitere Informationen, die sich auf die geplante Route beziehen, ausgegeben werden. Insbesondere ist es möglich, dass Informationen zum Strompreis an den unterschiedlichen ausgewählten Ladestationen zusätzlich ausgegeben werden. Derartige Zusatzinformationen können beispielsweise ebenfalls von einer entsprechenden Datenbank über die Datenbankschnittstelle bezogen werden. Dem Nutzer des Elektromobils wird eine eigene Abwägung ermöglicht. Beispielsweise können die Zusatzinformationen einen Strompreis an der ausgewählten Ladestation umfassen, wobei die entsprechenden Informationen hierzu vorzugsweise ebenfalls über die Datenbankschnittstelle bezogen werden können. Dem Nutzer wird es ermöglicht, seine eigenen Präferenzen zusätzlich zu der automatisiert vorgeschlagenen Route einzubringen. Die Flexibilität bei der Streckenauswahl wird verbessert.

In einer weiteren vorteilhaften Ausgestaltung umfasst die Vorrichtung eine Buchungseinheit zum Ermitteln einer voraussichtlichen Ankunftszeit an der ausgewählten Ladestation und zum Buchen der ausgewählten Ladestation zu der voraussichtlichen Ankunftszeit, wobei die Buchungseinheit bevorzugt eine Mobilkommunikationseinheit zur Mobilkommunikation mit einem Buchungsdienst zum Verwalten von Ladezeiträumen von Ladestationen umfasst. Über die Buchungseinheit können Ladestationen reserviert werden, sobald eine voraussichtliche Ankunftszeit feststeht. Hierzu wird mit der Mobilkommunikationseinheit vorzugsweise eine Mobilfunkverbindung mit einem entsprechenden Dienst hergestellt. Beispielsweise kann eine Reservierung über einen entsprechenden Internet-Dienst realisiert werden. Unter einer Verwaltung von Ladezeiträumen wird hierin insbesondere ein Buchungsmanagement verstanden, bei dem verschiedene Anfragen an zur Verfügung stehende Ressourcen koordiniert werden. Lange Wartezeiten an Ladestationen werden vermieden. Zudem wird der Benutzerkomfort weiter verbessert.

Weiter vorzugsweise ist die Datenbankschnittstelle zum Empfangen von Ladestationsinformationen mit verfügbaren Steckertypen der Ladestationen und/oder mit Daten zu Buchungen der Ladestationen durch andere Verkehrsteilnehmer ausgebildet. Zusätzlich zu den Positionen der Ladestationen können weitere Informationen zur Ladestation empfangen und miteinbezogen werden. Insbesondere können verfügbare Steckertypen, also Beschreibungen der Ladeschnittstellen der Ladestationen, oder auch Buchungsinformationen, also Informationen zur Belegung der Ladestation durch andere Fahrzeuge umfasst ein. Diese weiteren Informationen werden dann von der Ladeplanungseinheit beim Auswählen einer geeigneten Ladestation sowie beim Anpassen der mindestens einen geplanten Route berücksichtigt. Durch die zusätzliche Berücksichtigung weiterer Informationen kann die Auswahl einer geeigneten und bevorzugten Ladestation verbessert werden. Der Komfort für den Fahrer bzw. den Benutzer der Vorrichtung wird erhöht. Aufgrund mangelnder Standardisierung gibt es oft unterschiedliche Steckertypen an Ladestationen. Es wird verhindert, dass eine Ladestation vorgeschlagen wird, an der ein Steckersystem des Elektromobils gar nicht verfügbar ist.

Weiter vorteilhaft ist die Eingangsschnittstelle und/oder die Datenbankschnittstelle zum Empfangen von Umgebungsinformationen mit Daten zur Umgebung des Elektromobils ausgebildet, wobei die Umgebungsinformationen insbesondere Wetterdaten, Temperaturdaten, Verkehrsdaten und/oder Streckzustandsdaten umfassen; und ist die Energieplanungseinheit zum Ermitteln des voraussichtlichen Verlaufs des Ladezustands des Energiespeichers basierend auf den Umgebungsinformationen ausgebildet. Bei der Voraussage des Ladezustands des Energiespeichers können weitere Informationen berücksichtigt werden, um die Prognosesicherheit zu erhöhen. Durch die zusätzliche Berücksichtigung von Umgebungsinformationen, wie beispielsweise dem Wetter, der Temperatur, dem Verkehr und/oder dem Streckenzustand entlang der geplanten Route, kann die Genauigkeit bei der Ermittlung des voraussichtlichen Verlaufs des Ladezustands erhöht werden. Beispielsweise steigt der Energieverbrauch üblicherweise bei kaltem Wetter dadurch an, dass die Insassen des Elektromobils die Heizung anschalten. Aufgrund einer erhöhten Prognosegenauigkeit, kann ein entsprechender Sicherheitspuffer reduziert werden, so dass die Reisezeit durch bessere Ausnutzung der zur Verfügung stehenden Energie weiter vermindert werden kann.

Weiter bevorzugt ist die Datenbankschnittstelle zum Empfangen von Benutzerinformationen mit Daten zu einem Benutzer ausgebildet, wobei die Benutzerinformationen bevorzugt Termine und/oder präferierte Freizeitaktivitäten des Benutzers umfassen; und ist die Ladeplanungseinheit zum Auswählen der Ladestation basierend auf den Benutzerinformationen ausgebildet. Durch die Verwendung von Benutzerinformationen wird es ermöglicht, dass den Präferenzen, also den individuellen Vorgaben bzw. Vorlieben, eines Benutzers Rechnung getragen wird. Beispielsweise kann einem Benutzer, der gerne ins Kino geht, eine Ladestation, die direkt neben einem Kino liegt, vorgeschlagen werden. Die Auswahl der Ladestation wird weiter individualisiert und auf die spezifischen Anforderungen angepasst, so dass der Komfort des Benutzers weiter verbessert wird.

In einer Ausgestaltung ist die Ladeplanungseinheit zum Ermitteln einer benötigen Ladedauer an der ausgewählten Ladestation basierend auf der mindestens einen angepassten Route ausgebildet. Es ist möglich, dass die jeweils notwendige Ladedauer individuell angepasst wird. Beispielsweise kann eine Ladedauer, in der der Energiespeicher nur teilweise aufgeladen wird, für den Rest der Strecke ausreichend sein. Die erforderliche Ladedauer wird individuell ausgehend von der geplanten Route ermittelt bzw. optimiert. Hierdurch kann eine weitere Verkürzung der Reisezeit erreicht werden, da nur eine minimale Aufladung an der Ladestation entlang der Strecke erfolgt und die erneute vollständige Aufladung auf einen Zeitpunkt nach Erreichen des Ziels verschoben wird.

In einer bevorzugten Ausgestaltung ist die Ladeplanungseinheit zum Ausführen eines multikriteriellen Optimierungsverfahrens ausgebildet. Unter einem multikriteriellen Optimierungsverfahren ist ein Verfahren zu verstehen, bei dem verschiedene Ziele, wie beispielsweise eine kurze Reisedauer, eine schnelle Fahrt, eine bekannte Präferenz des Benutzers, ein günstiger Preis für das Laden des Energiespeichers etc. berücksichtigt werden. Zumeist ist eine Bewertungs- und/oder Gewichtungsfunktion vorgesehen, durch die den einzelnen Kriterien jeweils ein Gewicht beigemessen wird, so dass bei der Auswahl der Ladestation ausgehend von einer vordefinierten Gewichtung verschiedener Faktoren ein Optimum gefunden werden kann. Es versteht sich, dass es möglich ist, diese vorbekannte Gewichtung individuell für einen Benutzer festzulegen, so dass eine individuell optimierte Auswahl einer Ladestation erfolgen kann. Der Komfort für den Benutzer wird maximiert.

In einer bevorzugten Ausgestaltung des erfindungsgemäßen Systems zur Routenplanung umfasst das System einen Server zum Ausführen eines Buchungsdienstes zum Verwalten von Ladezeiträumen von Ladestationen. Die Ladezeiten oder auch Ladeslots an den einzelnen Ladestationen werden vorzugsweise von einem internetbasierten Buchungsdienst (Cloud-Buchungsdienst) verwaltet. Dieser Buchungsdienst reagiert auf Anfragen unterschiedlicher Benutzer und verwaltet die Ressourcen, also die Ladezeiten, an den verschiedenen Ladestationen. Hierdurch wird eine Verwendung aktueller Informationen sichergestellt.

Unter dem Begriff Elektromobil werden hierin alle Arten von voll- und teilelektrisch (hybridelektrisch) angetriebenen Fahrzeugen mit aufladbarem Energiespeicher verstanden, beispielsweise Elektroautos, Elektro-Lastkraftwagen oder auch Elektrozweiräder. Insbesondere bezieht sich der Begriff Elektromobil hierin auf elektrisch angetriebene Fahrzeuge mit einer Batterie (Akku) als Energiespeicher. Allerdings kann der Begriff des Elektromobils hierin auch elektrisch angetriebene Fahrzeuge mit einer Brennstoffzelle als Energiespeicher umfassen. Unter einem Ladezustand wird hierin eine absolute oder relative (mit Bezug auf eine maximal speicherbare Energiemenge) Angabe einer verbleibenden Energiemenge im Energiespeicher verstanden. Unter einer Positionsangabe versteht sich eine eindeutige (absolute oder relative) Angabe eines Ortes, beispielsweise in Form von Koordinaten. Die Position einer Ladestation entspricht also einer Angabe des Standorts der Ladestation. Unter einem Verlauf eines Ladezustands wird die Entwicklung des Ladezustands über die Zeit bzw. über die Strecke verstanden.

Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: eine schematische Darstellung einer erfindungsgemäßen Vorrichtung zur Routenplanung eines Elektromobils;
- Fig. 2: eine schematische Darstellung eines erfindungsgemäßen Systems;
- Fig. 3: eine Darstellung einer geplanten Route von einer Startposition zu einer Zielposition vor und nach einer Anpassung zum Passieren einer ausgewählten Ladestation;
- Fig. 4: eine schematische Darstellung einer erfindungsgemäßen Vorrichtung mit weiteren optionalen Bestandteilen; und
- Fig. 5: eine schematische Darstellung eines erfindungsgemäßen Verfahrens zur Routenplanung eines Elektromobils.

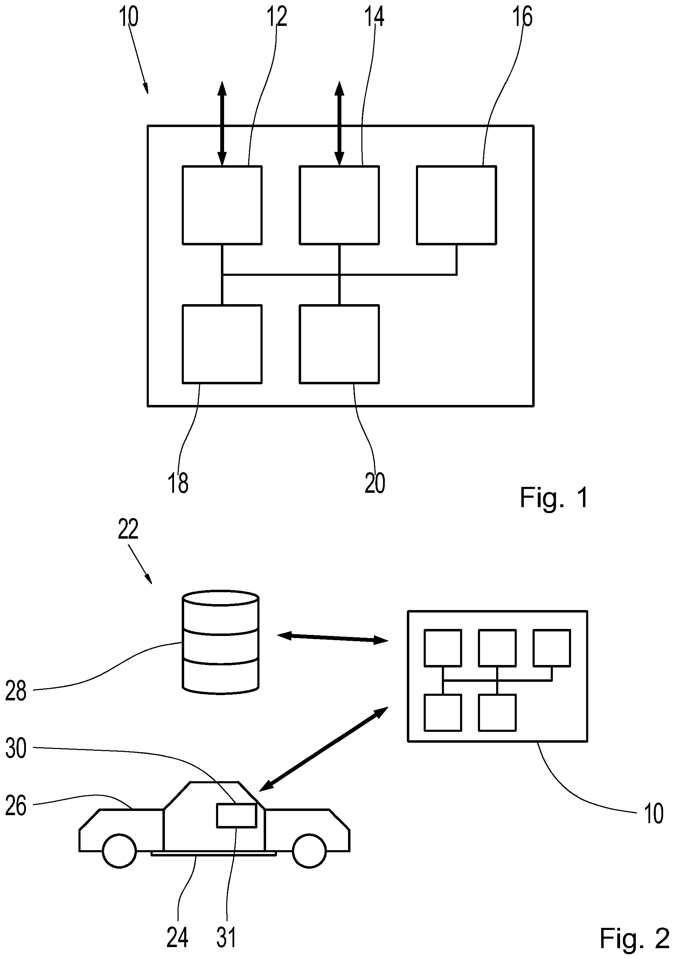

In der Figur 1 ist eine erfindungsgemäße Vorrichtung 10 zur Routenplanung eines Elektromobils nach der vorliegenden Erfindung dargestellt. Die Vorrichtung 10 umfasst eine Eingangsschnittstelle 12, eine Datenbankschnittstelle 14, eine Energieplanungseinheit 16, eine Ladeplanungseinheit 18 sowie eine Anpassungseinheit 20. Die Vorrichtung 10 ermöglicht es, eine vorgeplante Route anzupassen, um eine Ladestation zu passieren, an der ein Energiespeicher des Elektromobils aufgeladen werden kann. Die Ermittlung der mindestens einen angepassten Route erfolgt dabei einerseits basierend auf einem voraussichtlichen Verlauf des Ladezustands des Energiespeichers, also einer Prognose des Energieverbrauchs des Elektromobils bei der Fahrt entlang der Route, und andererseits basierend auf Ladestationsinformationen, die insbesondere die Positionen von in Frage kommenden Ladestationen umfassen. Durch die automatisierte und formalisierte Auswahl einer Ladestation bzw. Ermittlung einer angepassten Route, mit der diese ausgewählte Ladestation passiert wird, kann dem Benutzer der Vorrichtung 10 bzw. dem Fahrer des Elektromobils die Umplanung der Route wegen einer notwendigen Aufladung des Energiespeichers auf der Reise abgenommen werden. Hierdurch wird zum einen der Komfort beim Fahren verbessert und zum anderen die Reisezeit verkürzt bzw. optimiert.

Über die Eingangsschnittstelle 12 wird ein aktueller Ladezustand eines Energiespeichers des Elektromobils sowie eine geplante Route des Elektromobils empfangen. Die Eingangsschnittstelle entspricht dabei insbesondere einer Kommunikationsschnittstelle zur Kommunikation mit einem Fahrzeuginformationssystem, von dem der Ladezustand des Energiespeichers übermittelt wird, sowie zur Kommunikation mit einem Navigationsgerät oder einer entsprechenden Navigationssoftware, von der eine geplante Route übermittelt wird. Der aktuelle Ladezustand kann beispielsweise in Form einer absoluten Energieangabe (kWh oder kg Wasserstoff etc.) erfolgen oder auch in Form einer relativen Angabe (Prozent) in Bezug auf eine vorbekannte Gesamtkapazität angegeben sein. Die geplante Route wird vorzugsweise in einem entsprechenden Datenformat empfangen. Hierbei kann die Eingangsschnittstelle sowohl zur drahtlosen als auch zur drahtgebundenen Kommunikation ausgeführt sein. Die Kommunikation kann dabei uni- oder bidirektional erfolgen. Beispielsweise kann die Eingangsschnittstelle als Bluetoothmodul oder als Micro-USB Stecker ausgeführt sein.

Die Datenbankschnittstelle 14 dient zum Empfangen von Ladestationsinformationen mit Positionen von Ladestationen. Diese Positionen der Ladestationen entsprechen Ortsangaben von Einrichtungen, an denen ein Energiespeicher des Elektromobils wieder geladen werden kann. Insbesondere können die Positionen von Ladestationen Koordinaten oder andere entsprechende Angaben zum Standort von Ladesäulen zum Laden einer Batterie eines Elektromobils umfassen. Die Datenbankschnittstelle 14 kann dabei ebenfalls zur drahtlos oder drahtgebundenen uni- oder bidirektionalen Kommunikation ausgebildet sein. Insbesondere kann die Datenbankschnittstelle 14 eine Internetverbindung ermöglichen, so dass die Ladestationsinformationen aus dem Internet von einem entsprechenden Internetserver empfangen werden können. Beispielsweise kann die Datenbankschnittstelle 14 als Mobilfunkeinheit ausgebildet sein.

Die Energieplanungseinheit 16 ermöglicht ein Ermitteln eines voraussichtlichen Verlaufs des Ladezustands des Energiespeichers basierend auf dem aktuellen Ladezustand des Energiespeichers und der geplanten Route. In anderen Worten wird eine Prognose über die zukünftige Entwicklung des Inhalts des Energiespeichers erstellt. Hierzu wird die geplante Route ausgewertet. Insbesondere wird analysiert, welche Distanz zurückgelegt wird. Es können jedoch auch weitere Parameter wie Steigungen oder Gefälle etc. berücksichtigt werden, die einen Einfluss auf den Energieverbrauch beim Befahren der geplanten Route haben. Es versteht sich, dass die Prognose genauer wird, je mehr Informationen berücksichtigt werden. Zudem versteht es sich, dass die Prognose für die nahe Zukunft genauer als für einen weiter in der Zukunft liegenden Zeitpunkt ist. Der zeitliche Verlauf des Ladezustands wird prognostiziert bzw. ermittelt. Die Energieplanungseinheit 16 kann beispielsweise als Mikroprozessor ausgebildet sein.

Ausgehend von diesem voraussichtlichen Verlauf des Ladezustands, den Ladestationsinformationen mit den Positionen der Ladestationen sowie der geplanten Route wird dann in der Ladeplanungseinheit 18 eine Ladestation ausgewählt. Hierzu kann beispielsweise ein multikriterielles Optimierungsverfahren ausgeführt werden, bei dem die verschiedenen Zielsetzungen mit unterschiedlichen Gewichtungen berücksichtigt werden. So kann einerseits berücksichtigt werden, dass eine maximale Reichweite des Elektromobils ausgehend vom aktuellen und prognostizierten Ladezustand des Energiespeichers mit an Sicherheit grenzender Wahrscheinlichkeit ausreichend zum Erreichen der ausgewählten Ladestation ist. Andererseits kann berücksichtigt werden, dass nur eine möglichst geringe Abweichung von der geplanten Route notwendig ist, um die ausgewählte Ladestation zu erreichen. Hierdurch wird der Zeitverlust zum Erreichen der ausgewählten Ladestation minimiert. Zumeist soll erreicht werden, dass möglichst wenige Unterbrechungen der Fahrt zum Laden des Energiespeichers notwendig sind.

In der Anpassungseinheit 20 wird dann die ursprüngliche geplante Route derart angepasst, dass sie über die ausgewählte Ladestation führt. Im Normalfall entspricht die ermittelte angepasste Route in weiten Teilen der ursprünglich geplanten Route. Eine Abweichung ergibt sich dahingehend, dass die regelmäßig im Umfeld der geplanten Route liegende ausgewählte Ladestation zusätzlich angefahren wird und in der angepassten Route berücksichtigt wird. Die angepasste Route kann dann als Grundlage für die Navigation des Elektromobils dienen. Die Energieplanungseinheit 1, die Ladeplanungseinheit 18 sowie die Anpassungseinheit sind beispielsweise gemeinsam oder separat als Prozessor ausgebildet.

In der Figur 2 ist ein erfindungsgemäßes System 22 zur Routenplanung eines Elektromobils schematisch dargestellt. Das System umfasst eine Vorrichtung 10, einen Energiespeicher 24 eines Elektromobils 26, eine Datenbank 28 sowie eine Routenplanungseinheit 30.

In der dargestellten Ausführungsform ist die Vorrichtung 10 als Smartphone mit entsprechender App ausgebildet und kommuniziert mit einer Routenplanungseinheit 30, die sich innerhalb des Elektromobils 26 befindet. Es ist aber auch möglich, dass die Vorrichtung 10 als Teil eines Fahrzeuginformations- und Unterhaltungssystems, als Teil eines Navigationsgeräts oder in anderer Weise ausgebildet ist. Die Vorrichtung 10 kommuniziert über die Eingangsschnittstelle sowohl mit dem Energiespeicher 24 des Elektromobils 26 als auch mit der Routenplanungseinheit 30. Über die Datenbankschnittstelle kommuniziert die Vorrichtung 10 mit der Datenbank 28. Die Kommunikation mit dem Energiespeicher 24 und der Routenplanungseinheit 30 kann dabei beispielsweise über eine drahtlose Kurzstreckenkommunikation (Bluetooth oder Ähnliches) erfolgen. Die Kommunikation mit der Datenbank 28 erfolgt üblicherweise über eine Mobilfunkverbindung.

In der dargestellten Ausführungsform des erfindungsgemäßen Systems 22 umfasst das Elektromobil 26 einen Energiespeicher 24. Insbesondere kann der Energiespeicher 24 als Batterie bzw. als Akku ausgebildet sein. Der Energiespeicher 24 wird über eine entsprechende Schnittstelle, insbesondere über ein Kabel, an einer entsprechenden Ladestation gefüllt bzw. geladen. Dieser Ladevorgang dauert üblicherweise wesentlich länger als die Aufnahme von Benzin durch ein Fahrzeug mit Verbrennungsmotor. Ein vollständiger Ladevorgang zum Laden einer Batterie kann eine Zeitdauer von mehreren Stunden beanspruchen.

In der dargestellten Ausführungsform des Systems 22 umfasst das Elektromobil 26 die Routenplanungseinheit 30, die beispielsweise in einem Navigationsgerät 31 integriert ist. Es ist aber auch möglich, dass die Routenplanungseinheit 30 in Software implementiert ist und ebenfalls als Smartphone App oder auch als internetbasierter Dienst ausgeführt ist. Die Routenplanungseinheit 30 dient dazu, eine Route von einer Startposition zu einer Zielposition zu planen. Das Navigationsgerät 31 dient dazu, den Benutzer bzw. den Fahrer des Elektromobils 26 mit Navigationsinformationen zu versorgen.

Die Datenbank 28 ist in der dargestellten Ausführungsform entfernt von Elektromobil 26 und Vorrichtung 10 angeordnet und steht in einer Kommunikationsverbindung mit der Vorrichtung 10. Beispielsweise kann es sich bei der Datenbank 28 um eine internetbasierte Datenbank (Cloud-Datenbank) handeln, die ständig aktualisiert wird, um aktuelle Informationen über die Ladestationen vorzuhalten.

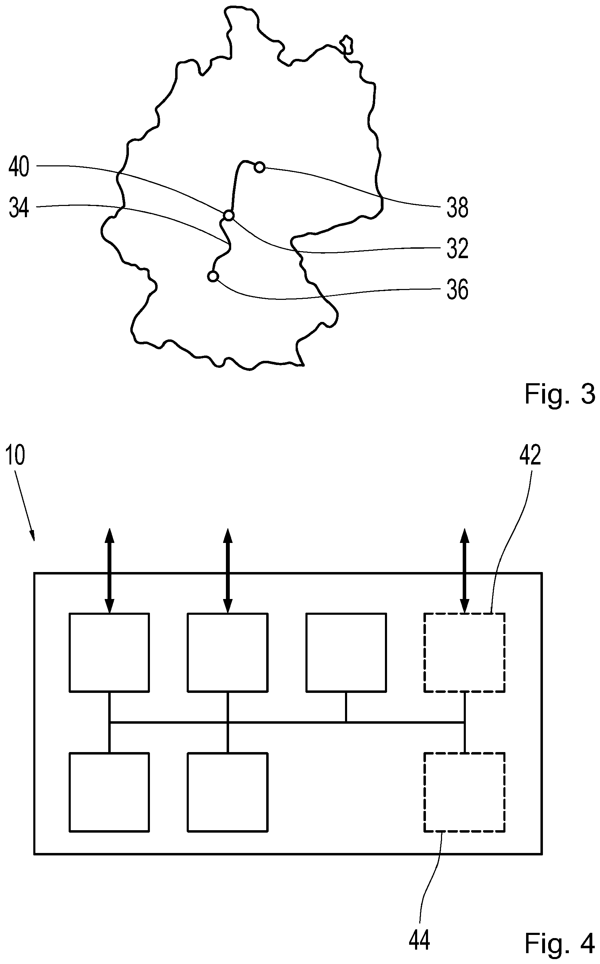

In der Figur 3 sind beispielhaft eine geplante Route 32 und eine angepasste Route 34 dargestellt. Um von einer Startposition 36 zu einer Zielposition 38 zu gelangen, wird zunächst in einer Routenplanungseinheit eine geplante Route 32 ermittelt. Diese wird dann in der Vorrichtung angepasst, um eine angepasste Route 34 zu ermitteln, bei der eine ausgewählte Ladestation 40 passiert wird. Es wird also ein Zwischenstopp bei einer Ladestation 40 eingeplant. Die geplante Route 32 und die angepasste Route 34 unterscheiden sich darin, dass ein Zwischenziel eingefügt wird, an dem ein Laden des Energiespeichers des Elektromobils möglich ist. Hierdurch kann es zu einer mehr oder weniger großen Abweichung von der ursprünglich geplanten Route 32 kommen, je nachdem in welchem Gebiet die Route verläuft und wie hoch die Dichte von Ladestationen in diesem Gebiet ist. Es versteht sich, dass je nach Länge der Strecke und je nach Größe des Energiespeichers auch mehr als ein Zwischenstopp zum Laden des Energiespeichers erforderlich ist und folglich in der Ladeplanungseinheit mehrere Ladestationen ausgewählt werden. Zudem versteht es sich, dass mehrere mögliche angepasste Routen ermittelt werden.

In der Figur 4 ist eine weitere Ausführungsform der erfindungsgemäßen Vorrichtung 10 schematisch dargestellt. Zusätzlich zu den bereits zuvor erläuterten Einheiten kann die Vorrichtung 10 optional eine Benutzerschnittstelle 42 umfassen. Diese Benutzerschnittstelle dient dazu, einem Benutzer eine Auswahl zwischen mehreren ermittelten angepassten Routen zu ermöglichen. Die mehreren angepassten Routen werden dem Benutzer zur Auswahl angeboten, und es wird eine Auswahl des Benutzers empfangen. Beispielsweise kann die Benutzerschnittstelle 42 hierzu als Touchscreen-Display ausgeführt sein.

Weiterhin kann die Vorrichtung 10 optional eine Buchungseinheit 44 umfassen. Diese Buchungseinheit dient dazu, eine voraussichtliche Ankunftszeit an der ausgewählten Ladestation zu ermitteln und eine Buchung der ausgewählten Ladestation auszuführen. Es wird also eine Reservierung einer Ladestation vorgenommen. Hierzu kann die Buchungseinheit 44 zu einer Mobilkommunikation, insbesondere über eine mobile Internetverbindung, mit einem internetbasierten Buchungsdienst, bei dem Ladezeiträume an Ladestationen verwaltet werden, umfassen. Die Buchungseinheit übermittelt dann eine Anfrage und erhält als Antwort eine Bestätigung oder eine Ablehnung zurück. Dadurch, dass sich die erfindungsgemäße Vorrichtung dazu eignet, eine voraussichtliche Ankunftszeit einer ausgewählten Ladestation bereits im Vorhinein festzulegen, kann eine Reservierung einer Ladestation zum benötigten Zeitpunkt erfolgen. Hierdurch wird vermieden, dass es an der ausgewählten Ladestation zu langen Wartezeiten kommt. Je nach Ausgestaltung können hierbei unterschiedliche Verwaltungsprinzipien zum Verwalten der Ladezeiträume verwendet werden.

Es versteht sich, dass die Datenbank oder eine andere Vorrichtung zusätzlich weitere Informationen zu den verfügbaren Ladestationen enthalten kann. Derartige zusätzliche Informationen können dann in der Vorrichtung bei der Auswahl der Ladestation berücksichtigt werden.

Beispielsweise kann berücksichtigt werden, welche Steckertypen, also welche Schnittstellen für das Laden des Energiespeichers an einer bestimmten Ladestation zur Verfügung stehen. Im Bereich der batteriebetriebenen Elektrofahrzeuge gibt es unterschiedliche Schnittstellen und unterschiedliche Ladekonzepte. Es ist für den Fahrer eines Elektromobils nicht sinnvoll, eine Ladestation anzusteuern, bei der keine entsprechende Schnittstelle zum Laden des eigenen Energiespeichers zur Verfügung steht.

Zudem ist es möglich, dass auch Buchungen der Ladestation durch andere Verkehrsteilnehmer bereits bei der Auswahl der Ladestation berücksichtigt werden. Hierzu können über die Datenbankschnittstelle entsprechende Daten zu Buchungen der Ladestation empfangen werden. Diese werden dann ebenfalls bei der Auswahl der Ladestation in der Ladeplanungseinheit berücksichtigt. Eine Ladestation, die bereits vollständig ausgebucht ist und die nicht für einen Ladevorgang des eigenen Elektromobils zur Verfügung steht, wird gemieden.

Weiterhin ist es möglich, dass über die Datenbankschnittstelle (oder auch über die Benutzerschnittstelle) zusätzlich Benutzerinformationen empfangen werden. Diese Benutzerinformationen beschreiben Präferenzen des Benutzers. Beispielsweise kann ein Benutzer, der gerne ins Kino geht, Wert darauf legen, dass eine Ladestation ausgewählt wird, die in der Nähe eines Kinos ist. Diese Präferenzen oder Vorlieben des Benutzers (Benutzerinformationen) werden dann bei der Auswahl der Ladestation in der Ladeplanungseinheit zusätzlich berücksichtigt. Insoweit wird ein anderes Optimierungsproblem zugrunde gelegt. Für einen Benutzer wird eine individuell auf seine Bedürfnisse und Vorlieben abgestimmte optimale Ladestation ausgewählt.

Weiterhin ist es möglich, dass über die Eingangsschnittstelle und/oder über die Datenbankschnittstelle Umgebungsinformationen empfangen werden und dass diese Umgebungsinformationen bei der Ermittlung des voraussichtlichen Verlaufs des Ladezustands des Energiespeichers berücksichtigt werden. So kann durch die Berücksichtigung von Umgebungsinformationen wie beispielsweise Daten über die Temperatur, das Wetter, den Streckenzustand oder den Verkehr auf der Strecke eine höhere Genauigkeit bei der Prognostizierung des Verlaufs des Ladezustands erreicht werden. Bei kaltem Wetter wird eine Batterie schneller entladen. Bei warmem Wetter ist es möglicherweise öfters notwendig, die Klimaanlage zu verwenden. Als Datenquelle können hierbei Sensoren am Elektromobil oder innerhalb des Elektromobils zur Verfügung stehende Informationen dienen (Temperatursensoren, Kameradaten, Feuchtesensoren etc.). Ebenfalls ist es möglich, dass Informationen von einem entsprechenden Dienst beispielsweise über das Internet abgefragt werden (Wetterprognosen, Verkehrs- und Stauinformationen, Streckenzustandsinformationen etc.).

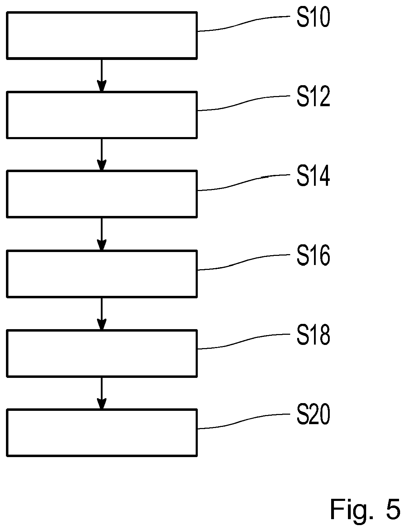

In der Figur 5 ist ein erfindungsgemäßes Verfahren zur Routenplanung eines Elektromobils schematisch dargestellt. Zunächst werden Schritte des Empfangens S10 eines aktuellen Ladezustands und des Empfangens S12 von Ladestationsinformationen ausgeführt. Weiterhin erfolgen Schritte des Ermittelns S14 eines voraussichtlichen Verlaufs des Ladezustands, des Auswählens S18 einer Ladestation sowie des Ermittelns S20 mindestens einer angepassten Route. Das Verfahren kann insbesondere als Softwareprodukt bzw. als Computerprogrammprodukt umgesetzt sein.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nicht-flüchtigen Datenträger gespeichert/vertrieben werden, beispielsweise auf einem optischen Speicher oder auf einem Halbleiterlaufwerk (SSD). Ein Computerprogramm kann zusammen mit Hardware und/oder als Teil einer Hardware, beispielsweise mittels des Internets oder mittels drahtgebundener oder drahtloser Kommunikationssysteme, vertrieben werden. Bezugszeichen in den Patentansprüchen sind nicht einschränkend zu verstehen.

### Bezugszeichen

- 10: Vorrichtung
- 12: Eingangsschnittstelle
- 14: Datenbankschnittstelle
- 16: Energieplanungseinheit
- 18: Ladeplanungseinheit
- 20: Anpassungseinheit
- 22: System
- 24: Energiespeicher
- 26: Elektromobil
- 28: Datenbank
- 30: Routenplanungseinheit
- 31: Navigationsgerät
- 32: Geplante Route
- 34: Angepasste Route
- 36: Startposition
- 38: Zielposition
- 40: Ausgewählte Ladestation
- 42: Benutzerschnittstelle
- 44: Buchungseinheit

## Patentansprüche

1. Vorrichtung (10) zur Routenplanung eines Elektromobils (26), mit:
einer Eingangsschnittstelle (12) zum Empfangen eines aktuellen Ladezustands eines Energiespeichers (24) des Elektromobils sowie einer geplanten Route (32) des Elektromobils;
einer Datenbankschnittstelle (14) zum Empfangen von Ladestationsinformationen mit Positionen von Ladestationen;
einer Energieplanungseinheit (16) zum Ermitteln eines voraussichtlichen Verlaufs des Ladezustands des Energiespeichers basierend auf dem aktuellen Ladezustand des Energiespeichers und der geplanten Route;
einer Ladeplanungseinheit (18) zum Auswählen einer Ladestation basierend auf dem voraussichtlichen Verlauf des Ladezustands, den Ladestationsinformationen und der geplanten Route; und
einer Anpassungseinheit (20) zum Ermitteln mindestens einer angepassten Route (34) über die Position der ausgewählten Ladestation (40) basierend auf der geplanten Route.

2. Vorrichtung (10) nach Anspruch 1, mit einer Benutzerschnittstelle (42) zum Ausgeben der mindestens einen angepassten Route (34) an einen Benutzer und zum Empfangen einer ausgewählten Route, die vom Benutzer ausgewählt wurde.

3. Vorrichtung (10) nach Anspruch 2, wobei
die Benutzerschnittstelle (42) zum Ausgeben von Zusatzinformationen zu der mindestens einen angepassten Route (34) ausgebildet ist; und
die Zusatzinformationen bevorzugt einen Strompreis an der ausgewählten Ladestation (40) umfassen.

4. Vorrichtung (10) nach einem der vorstehenden Ansprüche, mit:
einer Buchungseinheit (44) zum Ermitteln einer voraussichtlichen Ankunftszeit an der ausgewählten Ladestation und zum Buchen der ausgewählten Ladestation (40) zu der voraussichtlichen Ankunftszeit, wobei
die Buchungseinheit bevorzugt eine Mobilkommunikationseinheit zur Mobilkommunikation mit einem Buchungsdienst zum Verwalten von Ladezeiträumen von Ladestationen umfasst.

5. Vorrichtung (10) nach einem der vorstehenden Ansprüche, wobei die Datenbankschnittstelle (14) zum Empfangen von Ladestationsinformationen mit verfügbaren Steckertypen der Ladestationen und/oder mit Daten zu Buchungen der Ladestationen durch andere Verkehrsteilnehmer ausgebildet ist.

6. Vorrichtung (10) nach einem der vorstehenden Ansprüche, wobei
die Eingangsschnittstelle (12) und/oder die Datenbankschnittstelle (14) zum Empfangen von Umgebungsinformationen mit Daten zur Umgebung des Elektromobils (26) ausgebildet ist, wobei die Umgebungsinformationen insbesondere Wetterdaten, Temperaturdaten, Verkehrsdaten und/oder Streckzustandsdaten umfassen; und
die Energieplanungseinheit (16) zum Ermitteln des voraussichtlichen Verlaufs des Ladezustands des Energiespeichers (24) basierend auf den Umgebungsinformationen ausgebildet ist.

7. Vorrichtung (10) nach einem der vorstehenden Ansprüche, wobei
die Datenbankschnittstelle (14) zum Empfangen von Benutzerinformationen mit Daten zu einem Benutzer ausgebildet ist, wobei die Benutzerinformationen bevorzugt Termine und/oder präferierte Freizeitaktivitäten des Benutzers umfassen; und
die Ladeplanungseinheit (18) zum Auswählen der Ladestation basierend auf den Benutzerinformationen ausgebildet ist.

8. Vorrichtung (10) nach einem der vorstehenden Ansprüche, wobei die Ladeplanungseinheit (18) zum Ermitteln einer benötigen Ladedauer an der ausgewählten Ladestation (40) basierend auf der mindestens einen angepassten Route (34) ausgebildet ist.

9. Vorrichtung (10) nach einem der vorstehenden Ansprüche, wobei die Ladeplanungseinheit (18) zum Ausführen eines multikriteriellen Optimierungsverfahrens ausgebildet ist.

10. Navigationsgerät (31) mit einer Vorrichtung (10) nach einem der vorstehenden Ansprüche und einer Routenplanungseinheit (30) zum Ermitteln einer Route von einer Startposition zu einer Zielposition.

11. System (22) zur Routenplanung eines Elektromobils (26), mit:
einer Vorrichtung (10) nach einem der Ansprüche 1-9;
einem Energiespeicher (24) eines Elektromobils zum Speichern von Energie;
einer Datenbank (28) zum Vorhalten von Ladestationsinformationen; und
einer Routenplanungseinheit (30) zum Ermitteln einer Route von einer Startposition zu einer Zielposition.

12. System nach Anspruch 11, mit einem Server zum Ausführen eines Buchungsdienstes zum Verwalten von Ladezeiträumen von Ladestationen.

13. Verfahren zur Routenplanung eines Elektromobils (26), mit den Schritten:
Empfangen (S10) eines aktuellen Ladezustands eines Energiespeichers (24) des Elektromobils sowie einer geplanten Route (32) des Elektromobils;
Empfangen (S14) von Ladestationsinformationen mit Positionen von Ladestationen;
Ermitteln (S16) eines voraussichtlichen Verlaufs des Ladezustands des Energiespeichers basierend auf dem aktuellen Ladezustand des Energiespeichers und der geplanten Route;
Auswählen (S18) einer Ladestation basierend auf dem voraussichtlichen Verlauf des Ladezustands, den Ladestationsinformationen und der geplanten Route; und
Ermitteln (S20) mindestens einer angepassten Route (34) über die Position der ausgewählten Ladestation (40) basierend auf der geplanten Route.

14. Computerprogrammprodukt mit Programmcode zum Durchführen der Schritte des Verfahrens nach Anspruch 13, wenn der Programmcode auf einem Computer ausgeführt wird.
